# EUROPEAN PATENT APPLICATION

(11) **EP 1 175 048 A2**
(43) Date of publication of application: **23.01.2002**
(21) Application number: 01117544.5
(22) Date of filing: 20.07.2001
(51) Int. Cl.: H04L 12/56

(54) **Method and system for completing a transaction about an electronic auction of a network access fee**

(30) Priority: 21.07.2000 JP 2000221209
(71) Applicant: NEC CORPORATION, Tokyo (JP)
(72) Inventor: Homma, Hiroki, Minato-ku, Tokyo (JP)
(74) Representative: VOSSIUS & PARTNER

(57) **Abstract**

A system and method for electronically completing a transaction between a user and network access vendors potentially providing a network access for the user. The system is preferably implemented in software program. The system allows an occasional user to offer payable access fee over a computer or communications network. If the plural network access vendors judge whether to accept, reject or counter the offer, the user gets the acceptance, rejection or counteroffer. The user getting the acceptance or counteroffer can contract with the network access vendor providing it at favorable price.

## Description

The present invention relates generally to a method and system for facilitating an adaptive network access fee contract on a specified time at a specified price. For example, the network is the Internet, and the network access fee is the Internet access fee paid by a user to a network access vendor, such as an ISP (Internet Service Provider) that contracts with the user. The term "ISP" hereinafter includes not only one who only serves as an ISP but also the backbone provider also serving as an ISP. More particularly, the present invention relates to conducting an electronic auction between a user paying the Internet access fee and a plurality of ISPs potentially providing their resources in exchange for the payment.

Most of people participating in the Internet contract with ISPs to access to the Internet, paying the ISPs the Internet access fees set by the ISPs. The Internet access fee is predefined with no consideration of empty resources sometimes the ISPs hold, and is fixed for example as a monthly fee in a conventional fee system.

The ISPs recognize that there is a large source of latent demand associated with occasional users who are willing to contract for the empty resources at a favorable price. However, there is currently no effective way for an ISP neither to receive an offer from an occasional user at a particular price set by the occasional user, nor to inform the occasional user about the empty resource occurrence.

As apparent from the above conventional contract for the Internet access fee, a need exists for a system that permits an occasional user to offer a payable access fee to ISPs.

The present invention therefore provides a system and method for electronically completing a transaction between a user and network access vendors potentially providing a network access for the user on a specified time at a specified price.

A method according to one aspect of the present invention comprises: electronically receiving from the user a conditional offer including a payable access fee and information about designated network access vendors; electronically notifying the conditional offer to the designated network access vendors; electronically receiving from a specific one of the designated network access vendors an acceptance for the payable access fee included in the conditional offer; and electronically notifying the specific designated network access vendor and the acceptance to the user, so that the user contracts with the network access vendor at the payable access fee.

The foregoing method can be implemented as a computer program within an access fee auction center and can be built as a system for electronically completing the above-mentioned transaction.

One advantage of this method and system is that it results in an effective use of the empty resources that sometimes network access vendors hold. The effective use brings about more incomes on the network access vendors and network accesses with reasonable prices on the user.

A more complete understanding of the present invention, as well as further features and advantages of the present invention, will be obtained by reference to the following detailed description and drawings.

Fig. 1 is a schematic view of a computer network in accordance with an embodiment of the present invention;

Fig. 2 is an example of a computer network in accordance with one of Fig. 1;

Fig. 3 is a schematic view of an access fee auction center illustrated in Fig. 2;

Fig. 4 is a schematic view of a user terminal illustrated in Fig, 2; and

Fig. 5 is a schematic view of an ISP computer illustrated in Fig. 2.

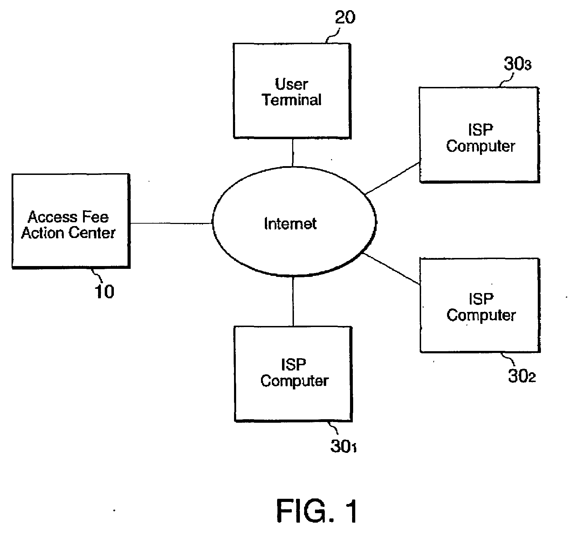

A method and apparatus of the present invention will now be discussed with reference to Figs. 1 to 6. The present invention allows a user to offer a payable access fee to ISPs designated by the user.

With reference to Fig. 1, a computer network according to an embodiment of the apparatus and method of the present invention is illustrated. As shown in Fig. 1, the computer network of the present embodiment generally comprises an access fee auction center 10, a user terminal 20, and ISP computers 30₁ to 30₃.

Using the above components, the present embodiment of the invention provides a method and apparatus to allow an access fee auction center 10 to enable communication between a user terminal 20 and a plurality of ISP computers 30₁ to 30₃ potentially providing the Internet access for the user terminal 20, and facilitate the adaptive network access fee contract on a specified time at a specified price. Specifically, the access fee auction center 10 electronically receives from the user terminal 20 a conditional offer including a payable access fee and information about designated ISPs, and then electronically notifies the conditional offer to the designated ISP computers 30₁ to 30₃. When electronically receiving from a specific one of the designated ISP computers 30₁ to 30₃ an acceptance for the payable access fee included in the conditional offer, the access fee auction center 10 electronically notifies the specific designated ISP computer 30₁, 30₂, or 30₃ and the acceptance to the user, so that the user can contract with the ISP at the payable access fee set by the user.

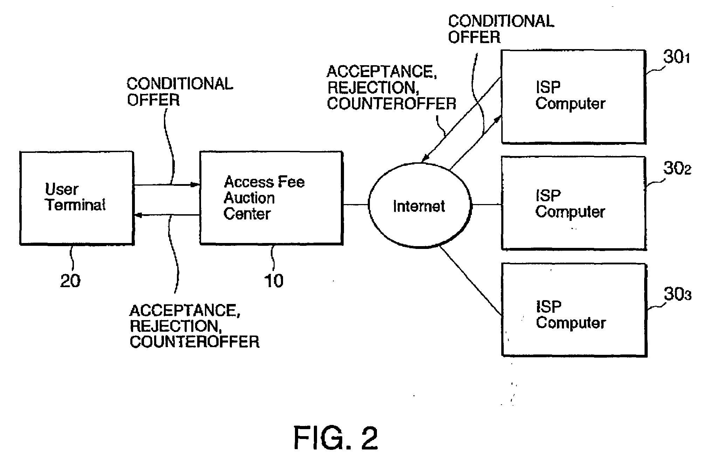

With reference to Fig. 2, a concrete example of the computer network of Fig. 1 is shown. In the example illustrated in Fig. 2, the access fee auction center 10 provides an access point for the user terminal 20, and the user terminal 20 can access to the access fee auction center 10 through the access point. The access fee auction center 10 is connected to the Internet. To the Internet, the ISP computers 30₁ to 30₃ are also connected.

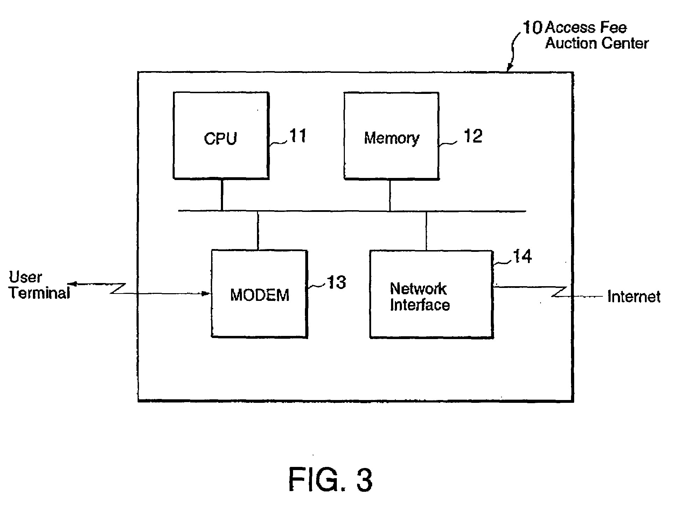

As shown in Fig. 3, the access fee auction center 10 comprises, for example, a central processing unit (CPU) 11, a memory 12, a modem 13 and a network interface 14. The memory 12 may conceptually include a random access memory (RAM) a hard-disk drive (HDD), and so on. The memory 12 contains a computer program which when executed by the CPU 11 causes the CPU 11 to perform the method for electronically completing a transaction between the user terminal 20 and the ISP computers 30₁ to 30₃ in accordance with this embodiment of the present invention, which is discussed in greater detail later. The memory 12 further contains data table that stores information on selectable ISPs, the data table being used by the user terminal 20 to select the designated ISPs. The modem 13 is used to cause the user terminal 20 to access to the access fee auction center 10, in cooperation with the computer program stored in the memory and the CPU 11 executing the computer program. More concretely, cooperating the computer program and the CPU 11, the modem 13 provides PPP connection between the user terminal 20 and the access fee auction center 10 as the initial step of accessing to the access fee auction center 10. The network interface 14 is controlled by the CPU 11 executing the computer program, so as to provide a communication path to the ISP computers 30₁ to 30₃ through the Internet.

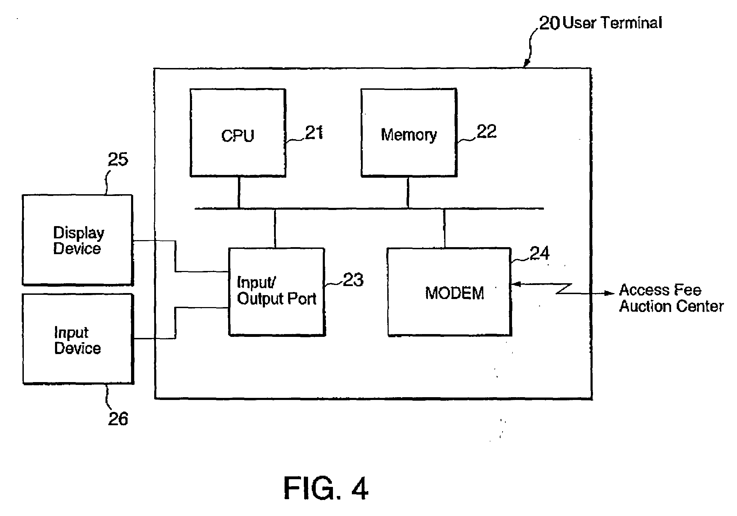

Referring to Fig. 4, the user terminal 20 will be described in greater detail. The user terminal 20 can be a personal computer, and comprises, for example, a central processing unit (CPU) 21 that controls the operation of the user terminal 20. The CPU 21 is electronically connected to a memory 22, an input/output port 23, a modem 24. The memory 22 may conceptually include a random access memory (RAM) a hard-disk drive (HDD), and so on. The memory 22 stores a computer program including software instructions which when executed by the CPU 21 causes the CPU 21 to interface the user terminal 20 with the access fee auction center 10. The computer program may include codes for establishing PPP connection, codes for browsing Web Pages, and codes for security in authentication and transmission of credit card number. The CPU 21 receives inputs from a user with the input device 26 via the input/output port 23. The input device 26 is for example a keyboard and a mouse. The CPU 21 transmits outputs to the user with the display device 25 via the input/output port 23. The modem 24 provides the communication path to the modem 13 of the access fee auction center 10, in cooperation with the computer program and the CPU 21.

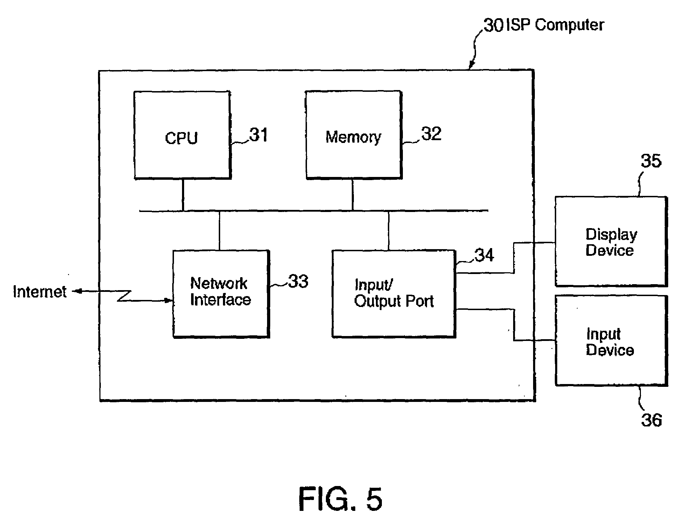

Referring to Fig. 5, the ISP computer 30₁, 30₂, or 30₃ will be described in greater detail. The ISP computer 30₁, 30₂, or 30₃ can be a personal computer or a workstation, and comprises, for example, a central processing unit (CPU) 31 that controls the operation of the ISP computer 30₁, 30₂, or 30₃. The CPU 31 is electronically connected to a memory 32, a network interface 33 and an input/output port 34. The memory 32 may conceptually include a random access memory (RAM) a hard-disk drive (HDD), and so on. The memory 32 stores a computer program including software instructions which when executed by the CPU 31 causes the CPU 31 to interface the ISP computer 30₁, 30₂, or 30₃ 20 with the access fee auction center 10 and to carry out bidding for the payable access fee set by the user. The network interface 33 is controlled by the CPU 31 executing the computer program, so as to provide a communication path to the access fee auction center 10 through the Internet. The CPU 31 receives inputs from an operator with the input device 36 via the input/output port 34. The input device 36 is for example a keyboard and a mouse. The CPU 31 transmits outputs to the operator with the display device 35 via the input/output port 34.

The method according to the present embodiment will now be discussed in greater detail. In the followings, although the access fee auction center 10, the user terminal 20, and the ISP computers 30₁ to 30₃ are performed by the CPUs 11, 21, 31 executing the computer program stored in the memory 12, 22, 32, respectively, descriptions are made about them as actions of the access fee auction center 10, the user terminal 20 (or the user), and the ISP computers 30₁ to 30₃ (or the ISPs), for the sake of clarity.

The user starts up the PPP connection program, and activates the modem 22 to establish the PPP connection between the user terminal 20 and the access fee auction center 10. Then the user starts up the Web browser program, and enters in the Web browser a URL (Uniform Resource Locator) of an access fee auction site opened on the access fee auction center 10. Thus, the user accesses to the access fee auction center 10 by using the user terminal 20.

On the access fee auction site, the access fee auction center 10 provides a list of selectable ISPs and a text field where the user enters the payable access fee, for example, per hour or per data unit. Instead of the list, other text fields are used for the user to designate the ISPs.

The user transmits a conditional offer including a payable access fee and information about designated ISPs. In detail, the user selects one or more ISPs from the selectable ISPs list, and enters the payable access fee in the text field, Then the user electronically submits them as the conditional offer into the access fee auction center 10,

When electronically receiving the conditional offer from the user, the access fee auction center 10 electronically notifying the conditional offer to the ISPs designated by the user, and thereby, inquires whether to accept, reject, or counter the conditional offer.

When electronically receiving the notification from the access fee auction center 10, each of the designated ISPs judges whether to accept, reject, or counter the conditional offer. Thereafter, the ISP computer 30₁, 30₂, 30₃ of each designated ISP electronically transmits, as a response for the inquiry, an acceptance, a rejection, or a counteroffer into the access fee auction center 10. For the response, a time limit may be predetermined.

When electronically receiving the responses for the foregoing inquiries, the access fee auction center 10 notifies the responses to the user. The notification may be automatically carried out by updating the Web page watched by the user, or may be carried out by the user manually updating the Web page.

In this embodiment, the user may make him/her options as the followings, depending contents and the numbers of the responses.

For example, if plural acceptances for the payable access fee are electronically issued by particular ones of the designated ISPs, the user recognizes the particular designated ISPs by the responses notified by the access fee auction center 10. In this event, the user electronically sends a new conditional offer including a new payable access fee lower than the current payable access fee. When electronically receiving the new conditional offer from the user, the access fee auction center 10 further electronically notifies, as the conditional offer, the new conditional offer to the particular designated ISPs. The process may be repeatedly carrying out until the ISP replying the acceptance for the conditional offer becomes one.

For example, if no acceptance for the payable access is electronically issued by the designated ISPs, the user recognizes them by the notification from the access fee auction center 10. In this event, the user issues a new conditional offer including a new payable access fee higher than the current payable access fee. When electronically receiving the new conditional offer from the user, the access fee auction center 10 further electronically notifies, as the conditional offer, the new conditional offer to the designated ISPs. The process may also be repeatedly carrying out until the ISP replying the acceptance for the conditional offer becomes one.

For example, if electrically receiving the counteroffer for the payable access from at least one of the designated ISPs through the access fee auction center 10, the user may consider the counteroffer to determine the Internet access at a favorable price. Then the user express the determination for the ISPs through the access fee auction center 10.

In the above-mentioned options, when electronically receiving an acceptance for the payable access fee from only a specific one of the designated ISPs, the access fee auction center 10 electronically informs the specific designated ISP and the acceptance to the user. The user can contracts with the specific designated ISP at the payable access fee, for example, with a transmission of credit card information. In the case of the transmission of the credit card information, the security technique, such as an SSL, may be used.

A general description of the present invention as well as a preferred embodiment of the present invention has been set forth above. Those skilled in the art to which the present invention pertains will recognize and be able to practice additional variations in the methods and system described which fall within the teachings of this invention. For example, although the conditional offer includes the payable access fee and information about designated ISPs in the preferred embodiment of the present invention, the conditional offer may further include information about a specified time to be used in the near future by the user. In this event, the ISP transmits the acceptance in also consideration of the specified time. That is, the method and system allows the user to reserve the Internet access right at the payable access fee set by the user. For example, although the counteroffer relates to the access fee in the above-mentioned embodiment, the counteroffer may relate to the future time on which the ISP will accept the payable access fee set by the user. All such modifications and additions are deemed to be within the scope of the invention which is to be limited only by the claims appended hereto.

## Claims

1. A method for electronically completing a transaction between a user and network access vendors potentially providing a network access for the user, comprising:
electronically receiving from the user a conditional offer including a payable access fee and information about designated network access vendors;
electronically notifying the conditional offer to the designated network access vendors;
electronically receiving from a specific one of the designated network access vendors an acceptance for the payable access fee included in the conditional offer; and
electronically notifying the specific designated network access vendor and the acceptance to the user, so that the user contracts with the network access vendor at the payable access fee.

2. A method as claimed in claim 1, further comprising repeatedly carrying out a predetermined process after the electronically notifying the conditional offer and before the electronically receiving from the specific designated network access vendor, the predetermined process comprising:
if plural acceptances for the payable access fee are electronically received from particular ones of the designated network access vendors, electrically notifying the particular designated network access vendors to the user;
electronically newly receiving from the user a new conditional offer including a new payable access fee lower than the payable access fee; and
electronically notifying, as the conditional offer, the new conditional offer to the particular designated network access vendors.

3. A method as claimed in claim 1 or 2, further comprising repeatedly carrying out a predetermined process after the electronically notifying the conditional offer and before the electronically receiving from the specific designated network access vendor, the predetermined process comprising:
if no acceptance for the payable access is electronically received from the designated network access vendors, electrically notifying information about no acceptance to the user;
electronically newly receiving from the user a new conditional offer including a new payable access fee higher than the payable access fee; and
electronically notifying, as the conditional offer, the new conditional offer to the designated network access vendors.

4. A method as claimed in claim 1, 2 or 3, further comprising, after the electronically notifying the conditional offer and before the electronically receiving from the specific designated network access vendor:
electrically receiving a counteroffer for the payable access from at least one of the designated network access vendors; and
electrically notifying the counteroffer to the user to inquire whether to express an approval for the counteroffer.

5. A method as claimed in claim 1, 2, 3 or 4, wherein the conditional offer includes information about a specified time to be used by the user, the specific designated network access vendor transmitting the acceptance in also consideration of the specified time.

6. An access fee auction center for electronically completing a transaction between a user and network access vendors potentially providing a network access for the user, comprising:
a memory device storing a program;
a processor in communication with the memory;
the processor operative with the program to:
electronically receive from the user a conditional offer including a payable access fee and information about designated network access vendors;
electronically notify the conditional offer to the designated network access vendors;
electronically receive from a specific one of the designated network access vendors an acceptance for the payable access fee included in the conditional offer; and
electronically notify the specific designated network access vendor and the acceptance to the user, so that the user contracts with the network access vendor at the payable access fee.

7. An access fee auction center as claimed in claim 6, wherein the processor is further operative to repeatedly carry out a predetermined process after the electronically notifying the conditional offer and before the electronically receiving from the specific designated network access vendor, the predetermined process is to:
if plural acceptances for the payable access fee are electronically received from particular ones of the designated network access vendors, electrically notify the particular designated network access vendors to the user;
electronically newly receive from the user a new conditional offer including a new payable access fee lower than the payable access fee; and
electronically notify, as the conditional offer, the new conditional offer to the particular designated network access vendors.

8. An access fee auction center as claimed in claim 6 or 7, wherein the processor is further operative to repeatedly carry out a predetermined process after the electronically notifying the conditional offer and before the electronically receiving from the specific designated network access vendor, the predetermined process is to:
if no acceptance for the payable access is electronically received from the designated network access vendors, electrically notify information about no acceptance to the user;
electronically newly receive from the user a new conditional offer including a new payable access fee higher than the payable access fee; and
electronically notify, as the conditional offer, the new conditional offer to the designated network access vendors.

9. An access fee auction center as claimed in claim 6, 7 or 8, wherein, after the electronically notifying the conditional offer and before the electronically receiving from the specific designated network access vendor, the processor is further operative to:
electrically receive a counteroffer for the payable access from at least one of the designated network access vendors; and
electrically notify the counteroffer to the user to inquire whether to express an approval for the counteroffer.

10. An access fee auction center as claimed in claim 6, 7, 8, or 9, wherein the conditional offer includes information about a specified time to be used by the user, the specific designated network access vendor transmitting the acceptance in also consideration of the specified time.

11. An access fee auction center for electronically completing a transaction between a user and network access vendors potentially providing a network access for the user, comprising:
means for electronically receiving from the user a conditional offer including a payable access fee and information about designated network access vendors;
means for electronically notifying the conditional offer to the designated network access vendors;
means for electronically receiving from a specific one of the designated network access vendors an acceptance for the payable access fee included in the conditional offer; and
means for electronically notifying the specific designated network access vendor and the acceptance to the user, so that the user contracts with the network access vendor at the payable access fee.

12. An access fee auction center as claimed in claim 11, further comprising means for repeatedly carrying out a predetermined process after the electronically notifying the conditional offer and before the electronically receiving from the specific designated network access vendor, the predetermined process is to:
if plural acceptances for the payable access fee are electronically received from particular ones of the designated network access vendors, electrically notify the particular designated network access vendors to the user;
electronically newly receive from the user a new conditional offer including a new payable access fee lower than the payable access fee; and
electronically notify, as the conditional offer, the new conditional offer to the particular designated network access vendors.

13. An access fee auction center as claimed in claim 11 or 12, further comprising means for repeatedly carrying out a predetermined process after the electronically notifying the conditional offer and before the electronically receiving from the specific designated network access vendor, the predetermined process is to:
if no acceptance for the payable access is electronically received from the designated network access vendors, electrically notify information about no acceptance to the user;
electronically newly receive from the user a new conditional offer including a new payable access fee higher than the payable access fee; and
electronically notify, as the conditional offer, the new conditional offer to the designated network access vendors.

14. An access fee auction center as claimed in claim 11, 12 or 13, further comprising:
means for electrically receiving a counteroffer for the payable access from at least one of the designated network access vendors after the electronically notifying the conditional offer and before the electronically receiving from the specific designated network access vendor; and
means for electrically notifying the counteroffer to the user to inquire whether to express an approval for the counteroffer.

15. An access fee auction center as claimed in claim 11, 12, 13 or 14, wherein the conditional offer includes information about a specified time to be used by the user, the specific designated network access vendor transmitting the acceptance in also consideration of the specified time.

16. A computer program which is for electronically completing a transaction between a user and network access vendors potentially providing a network access for the user and which when executed by a processor causes the processor to perform:
electronically receiving from the user a conditional offer including a payable access fee and information about designated network access vendors;
electronically notifying the conditional offer to the designated network access vendors;
electronically receiving from a specific one of the designated network access vendors an acceptance for the payable access fee included in the conditional offer; and
electronically notifying the specific designated network access vendor and the acceptance to the user, so that the user contracts with the network access vendor at the payable access fee.

17. A computer program as claimed in claim 16, which when executed by the processor causes the processor to further perform repeatedly carrying out a predetermined process after the electronically notifying the conditional offer and before the electronically receiving from the specific designated network access vendor, the predetermined process comprising:
if plural acceptances for the payable access fee are electronically received from particular ones of the designated network access vendors, electrically notifying the particular designated network access vendors to the user;
electronically newly receiving from the user a new conditional offer including a new payable access fee lower than the payable access fee; and
electronically notifying, as the conditional offer, the new conditional offer to the particular designated network access vendors.

18. A computer program as claimed in claim 16 or 17, which when executed by the processor causes the processor to further perform repeatedly carrying out a predetermined process after the electronically notifying the conditional offer and before the electronically receiving from the specific designated network access vendor, the predetermined process comprising:
if no acceptance for the payable access is electronically received from the designated network access vendors, electrically notifying information about no acceptance to the user;
electronically newly receiving from the user a new conditional offer including a new payable access fee higher than the payable access fee; and
electronically notifying, as the conditional offer, the new conditional offer to the designated network access vendors.

19. A computer program as claimed in claim 16, 17 or 18, which when executed by the processor causes the processor to further perform, after the electronically notifying the conditional offer and before the electronically receiving from the specific designated network access vendor:
electrically receiving a counteroffer for the payable access from at least one of the designated network access vendors; and
electrically notifying the counteroffer to the user to inquire whether to express an approval for the counteroffer.

20. A computer program as claimed in claim 16, 17, 18 or 19, wherein the conditional offer includes information about a specified time to be used by the user, the specific designated network access vendor transmitting the acceptance in also consideration of the specified time.
